Europäisches Patentamt

European Patent Office

Office européen des brevets

(11) Veröffentlichungsnummer : **0 324 200 B1**

## (12) EUROPÄISCHE PATENTSCHRIFT

(45) Veröffentlichungstag der Patentschrift :
22.01.92 Patentblatt 92/04

(21) Anmeldenummer : 88202773.3

(22) Anmeldetag : 05.12.88

(51) Int. Cl.⁵ : **B01D 47/06**

(54) Einrichtung zum Zuführen der Waschflüssigkeit in einen Radialstromwäscher.

(30) Priorität : **12.01.88 DE 3800604**

(43) Veröffentlichungstag der Anmeldung :
**19.07.89 Patentblatt 89/29**

(45) Bekanntmachung des Hinweises auf die
Patenterteilung :
**22.01.92 Patentblatt 92/04**

(84) Benannte Vertragsstaaten :
**AT BE CH DE ES IT LI NL**

(56) Entgegenhaltungen :
**FR-A- 1 428 714
US-A- 3 085 793
SOVIET INVENTIONS ILLUSTRATED, Woche
K05, Klasse J01, 16. März 1983, Seite 20, Sektion CH, Nr. 83-011450, Derwent Publications
ltd, London, GB; & SU-A-915 911 (V.I. PUKHI-
RYA) 30-03-1982**

(73) Patentinhaber : **METALLGESELLSCHAFT AG
Reuterweg 14 Postfach 3724
W-6000 Frankfurt/M.1 (DE)**

(72) Erfinder : **Mack, Gerhard
Weissdornweg 36
W-6070 Langen (DE)**
Erfinder : **Schneider, Reinhold
An der Vogelhecke 7
W-6078 Neu-Isenburg (DE)**

(74) Vertreter : **Müller, Kurt
Metallgesellschaft AG Postfach 3724
W-6000 Frankfurt am Main 1 (DE)**

EP 0 324 200 B1

## Beschreibung

Die Erfindung bezieht sich auf eine Einrichtung zum Zuführen der Waschflüssigkeit in einen Radialstromwäscher, bei dem der Radialspalt durch einen oberen horizontalen Rand der Gasleiteinrichtung und einen gegenüberliegenden unteren horizontalen Rand der in der Höhe verstellbaren Flüssigkeits-Zufuhreinrichtung gebildet ist.

Für Radialstromwäscher sind verschiedene Ausführungsformen bekannt geworden (vergleiche Stahl und Eisen, 86 (1966), Seiten 399-406 ; Ullmann, 4. Auflage (1972), Band 2, Seiten 227-235, insbesondere Seite 234). Sie werden angewandt, wenn große Gasmengen entstaubt und gleichzeitig gekühlt werden sollen. Zur Einstellung auf unterschiedliche Betriebsbedingungen kann der aus zwei gegenüberliegenden ringförmigen Bauteilen gebildete Radialspalt verändert werden, indem eines der beiden ringförmigen Bauteile senkrecht zur Radialspaltebene verschoben wird. Damit wird die Gasgeschwindigkeit im Spaltquerschnitt reguliert, wodurch die Gasreinigung maßgeblich beeinflußt wird. Größere Gasgeschwindigkeiten ergeben im allgemeinen höhere Abscheideleistungen, sind aber auch mit einem höheren Druckverlust verbunden. Effektivität und Wirtschaftlichkeit der Gasreinigung sind also tendenziell gegenläufig, so daß ein optimaler Spaltquerschnitt oder eine optimale Gasgeschwindigkeit nicht allgemein, sondern nur mit Bezug auf den konkreten Anwendungsfall angegeben werden kann.

Eine weitere bedeutsame Regelgröße bei der Gasreinigung mittels Radialstromwäschern ist die Menge der Waschflüssigkeit, die zur Erzielung einer bestimmten Gasabkühlung und Reinigungswirkung zugeführt werden muß. Auch hierzu lassen sich keine allgemein gültigen Angaben machen, weil man nur bei ganz konkret vorgegebenen Rahmenbedingungen bestimmen kann, zu welchem Anteil die Waschflüssigkeit in Form feiner Tröpfchen oder in Form von Dampf im Gasstrom vorhanden sein soll.

Unabhängig von den vorgenannten Einflußgrößen haben sich bei der Reinigung von Gasen mit klebenden und/oder backenden Stäuben häufig Probleme ergeben, wenn die Waschflüssigkeit mit hohem Druck in den Radialstromwäscher eingedüst wird. Dabei läßt sich nämlich nicht vermeiden, daß unkontrollierte Wirbel entstehen, in denen bereits stromauf vom Radialspalt eine Bindung der Staubpartikel an die Flüssigkeitströpfchen erfolgt. Dadurch entsteht eine klebende und/oder backende Masse, die mit dem Gasstrom nicht vollständig ausgetragen werden kann und deren im Radialstromwäscher verbleibender Teil überall dort zu Ansätzen und Verkrustungen führt, wo der Gasstrom Ablagerungen nicht mitreissen kann. Durch solche Ansätze und Verkrustungen kann der Betrieb eines Radialstromwäschers erheblich beeinträchtigt werden. Häufig werden die Strömungsquerschnitte durch Ablagerungen in kurzer Zeit derartig eingeengt, daß ein wirtschaftlicher Betrieb wegen zu hoher Druckverluste nicht mehr möglich ist. Längere oder häufige Stillstandszeiten, die für die Abreinigung der Ansätze erforderlich sind, können oft nicht zugelassen werden, so daß der Einsatz von Radialstromwäschern in solchen Fällen von vornherein nicht in Betracht kommt. Meistens treten Beeinträchtigungen durch klebende und/oder backende Stäube aber erst dann auf, wenn ein Radialstromwäscher in Betrieb ist. Dann kann es zu ganz erheblichen wirtschaftlichen Nachteilen sowohl beim Betreiber als auch beim Lieferanten einer derartigen Anlage kommen.

Es besteht daher die Aufgabe, eine Einrichtung der eingangs genannten Art so auszubilden, daß die geschilderten Ansätze und Verkrustungen infolge unkontrollierter Wirbelbildung beim Einbringen der Waschflüssigkeit in einen Radialstromwäscher vermieden werden können, und daß eine wirtschaftliche Betriebsweise von Radialstromwäschern auch bei der Reinigung von Gasen mit klebenden und/oder backenden Stäuben möglich ist.

Zur Lösung dieser Aufgabe wird eine Flüssigkeits-Zufuhreinrichtung vorgeschlagen, die besteht aus

a)  einem kreisringförmigen, ebenen Boden mit einer nach oben weisenden, den unteren Rand des Radialspalts bildenden zylindrischen äußeren Begrenzung und einer nach unten weisenden, einen Anschlußflansch tragenden zylindrischen inneren Begrenzung,

b)  einer mit dem Anschlußflansch verbundenen Platte mit zentralem Rohranschluß,

c)  einer auf die Platte aufgesetzten Dralleinrichtung, deren obere ebene Abdeckung eine zentrale Durchtrittsöffnung aufweist,

d)  einer kegelförmigen Abdeckung, die über ein Rohr auf der Abdeckung abgestützt ist sowie

e)  einem auf die Platte aufgesetzten Zylinder, dessen äußerer Durchmesser etwas kleiner ist, als der größte Durchmesser der kegelförmigen Abdeckung.

In weiterer Ausbildung des Erfindungsgedankens ist vorgesehen, daß die kegelförmige Abdeckung oben eine zylindrische Öffnung aufweist, die von einer kleineren kegelförmigen Abdeckung unter Freilassung eines Spaltes zwischen Abdeckung und Abdeckung überdeckt ist.

Beim Betrieb der erfindungsgemäßen Flüssigkeits-Zufuhreinrichtung wird die Waschflüssigkeit durch den zentralen Rohranschluß in die durch den kreisringförmigen ebenen Boden und die zylindrische äußere Begrenzung gebildete Schüssel eingebracht und durch das von oben nach unten zuströmende und über den Radialspalt abströmende Gas mitgerissen.

Die kegelförmige Abdeckung dient dabei als Gasleiteinrichtung. Anders als bei herkömmlichen Flüssigkeits-Zufuhreinrichtungen wird die Waschflüssigkeit also nicht mittels hohem Druck durch Verdüsen in den Gasstrom eingebracht, sondern aus einem großflächigen Vorratsraum vom strömenden Gas mitgerissen, wobei sich keine unkontrollierten Wirbel bilden, in denen eine klebende und/oder backende Masse aus Waschflüssigkeitströpfchen und Staubpartikeln bilden könnte. Hinsichtlich des Energiebedarfs unterscheidet sich die erfindungsgemäße Einrichtung nicht von herkömmlichen Flüssigkeits-Zufuhreinrichtungen. Sie hat aber den Vorteil, daß die Vermischung der Waschflüssigkeit im Gasstrom so erfolgt, daß keine unkontrollierten Wirbel entstehen können und daß die Strömungsverhältnisse stromauf vom Radialspalt keine Ablagerungen der aus Staub und Waschflüssigkeit bestehenden klebrigen und/oder anbackenden Masse erlauben. Soweit sich im Gasströmungsraum oberhalb der Flüssigkeitsoberfläche Wirbel oder strömungstote bzw. strömungsschwache Gebiete bilden, befinden sich in diesen nur trockene staubhaltige Gase, die keine Anbackungen oder Verkrustungen verursachen können. Die Aufnahme von Waschflüssigkeit in den Gasstrom erfolgt im Bereich der Oberfläche der Waschflüssigkeit, also nur an der äußeren Begrenzung des Gasstroms, wo Ablagerungen jedenfalls bis zum Radialspalt hin nicht möglich sind.

Weitere Einzelheiten und Vorteile werden anhand des in der Fig. dargestellten Ausführungsbeispiels näher erläutert.

Die erfindungsgemäße Einrichtung zum Zuführen der Waschflüssigkeit in einen Radialstromwäscher besteht im wesentlichen aus einem kreisringförmigen, ebenen Boden (1) mit einer nach oben weisenden, den unteren Rand des Radialspalts bildenden zylindrischen äußeren Begrenzung (2) und einer nach unten weisenden, einen Anschlußflansch (14) tragenden zylindrischen inneren Begrenzung (3). Mit dem Anschlußflansch (14) ist eine Platte (4) mit zentralem Rohranschluß (5) verbunden. Auf die Platte (4) ist eine Dralleinrichtung (6) aufgesetzt, deren obere ebene Abdeckung (7) eine zentrale Durchtrittsöffnung (16) aufweist. Auf der Abdeckung (7) ist über ein Rohr (9) eine kegelförmige Abdeckung (8) abgestützt. Schließlich ist auf die Platte (4) noch ein Zylinder (10) aufgesetzt, dessen äußerer Durchmesser etwas kleiner ist als der größte Durchmesser der kegelförmigen Abdeckung (8).

Gemäß weiterer Ausbildung des Erfindungsgedankens nach Anspruch 2 weist die kegelförmige Abdeckung (8) oben eine zylindrische Öffnung (11) auf, die von einer kleineren kegelförmigen Abdeckung (12) unter Freilassung eines Spaltes (13) zwischen Abdeckung (8) und Abdeckung (12) überdeckt ist.

Dargestellt ist ferner ein Teil der Gasleiteinrichtung eines Radialstromwäschers mit einem ringförmigen Abschluß (15), der den oberen Rand des Radialspalts bildet. Die gesamte Einrichtung zum Zuführen der Waschflüssigkeit ist zur Veränderung des Radialspalts in an sich bekannter Weise heb- und senkbar ausgebildet.

Beim Betrieb des Radialstromwäschers wird der erfindungsgemäßen Flüssigkeits-Zufuhreinrichtung Waschflüssigkeit durch den zentralen Rohranschluß (5) zugeführt. Der Hauptteil der Waschflüssigkeit wird durch die Dralleinrichtung (6) und den Zylinder (10) in die aus ebenem Boden (1) und äußerer Begrenzung (2) gebildete, oben offene Wanne geführt. Sie tritt dabei durch den zwischen Abdeckung (8) und Zylinder (10) gebildeten Spalt radial aus, weist wegen der Dralleinrichtung (6) aber eine zusätzliche Geschwindigkeitskomponente in Umfangsrichtung auf.

Der kleinere Teil der zugeführten Waschflüssigkeit steigt durch die zentrale Durchtrittsöffnung (16) im Rohr (9) weiter nach oben auf und tritt durch die zylindrische Öffnung (11) und den Spalt (13) zwischen Abdeckung (8) und Abdeckung (12) in den Gasraum ein, wo sie über die Abdeckung (8) nach unten abfließt.

Wird der Radialstromwäscher nicht mit einem Gasstrom beaufschlagt, so stellt sich in der aus ebenem Boden (1) und Begrenzung (2) gebildeten Wanne ein Flüssigkeitsspiegel entsprechend dem oberen Rand der äußeren Begrenzung (2) ein, wobei diese äußere Begrenzung (2) bei weiterer Flüssigkeitszufuhr einen Überlauf bildet. Wird der Radialstromwäscher hingegen bestimmungsgemäß mit einem Gasstrom beaufschlagt, dann wird dieser Gasstrom an der Flüssigkeitsoberfläche nach außen zum Radialspalt hin abgelenkt, wobei sich eine konvex nach unten hin verlagerte Flüssigkeitsoberfläche bildet. An der Grenzfläche zwischen Gasstrom und Flüssigkeitsoberfläche, d.h. auch auf der flüssigkeitsbedeckten Abdeckung (8) wird die Waschflüssigkeit vom Gasstrom mitgerissen und Richtung Radialspalt transportiert. Die Aufteilung der Waschflüssigkeit in kleinste Tröpfchen erfolgt im Radialspalt selbst sowie in einem kurzen stromab vom Radialspalt liegenden Bereich. Auf diese Weise werden die bei den herkömmlichen Flüssigkeits-Zufuhreinrichtungen beobachteten unkontrollierten Wirbel und Ablagerungen des klebenden und anbackenden Staub-Flüssigkeitsgemisches vermieden. Auf der Abdeckung (12), die nur vom trockenen Gasstrom überstrichen wird, können sich Ablagerungen nicht bilden.

Überraschenderweise hat sich gezeigt, daß es für das Einbringen der Waschflüssigkeit in einen Radialstromwäscher nicht erforderlich ist, auf die mit hohem flüssigkeitsseitigen Druck betriebenen bekannten Verdüsungs- oder Zerstäubungseinrichtungen zurückzugreifen. Die erforderliche Flüssigkeitsmenge ist vielmehr ohne weiteres allein durch den Kontakt des Gasstroms mit einer ausreichend großen Flüssigkeitsoberfläche in den Gasstrom einzubringen. Die erforderliche Aufteilung in feinste Tröpfchen, die bei der erfindungsgemäßen Einrichtung im Radialspalt erfolgt, ist zwar mit einem etwas höheren gasseitigen Druckverlust verbunden, was in der Gesamtbilanz aber durch den flüssigkeitsseitig geringeren Energiebedarf kompensiert wird.

Mit der erfindungsgemäßen Flüssigkeits-Zufuhreinrichtung ist es möglich, Radialstromwäscher auch zur Reinigung solcher Gase einzusetzen, die klebende und anbackende Stäube enthalten, weil unkontrollierte Wirbel stromauf vom Radialspalt allenfalls im trockenen, nicht befeuchteten Gasstrom auftreten können, der keine Ablagerungen oder Verkrustungen verursachen kann.

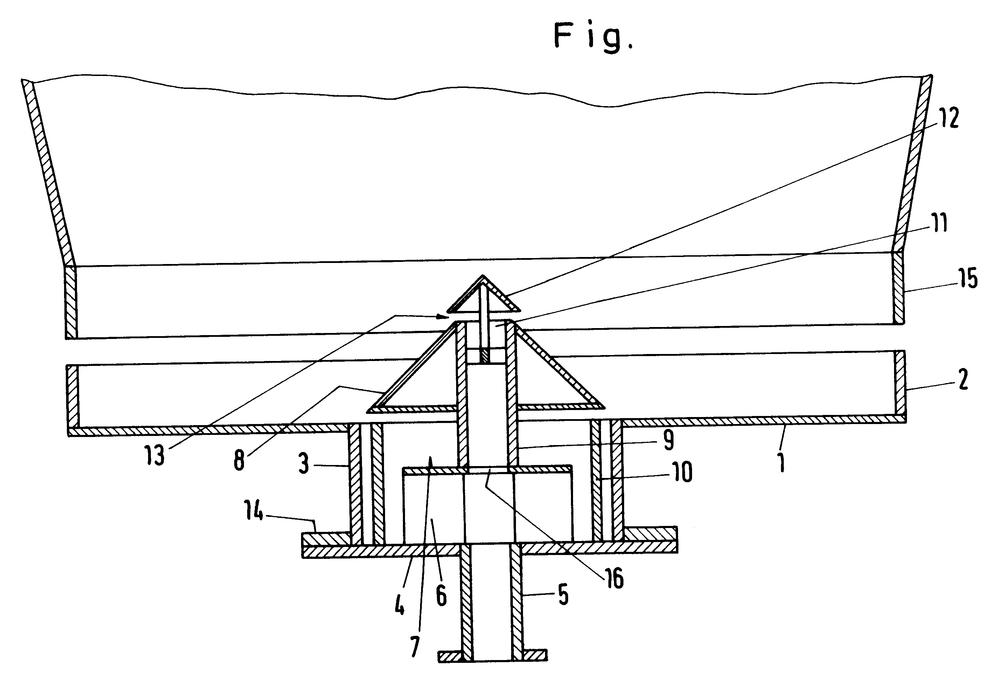

## Patentansprüche

1. Einrichtung zum Zuführen der Waschflüssigkeit in einen Radialstromwäscher, bei dem der Radialspalt durch einen oberen horizontalen Rand der Gasleiteinrichtung und einen gegenüberliegenden unteren horizontalen Rand der in der Höhe verstellbaren Flüssigkeits-Zufuhreinrichtung gebildet ist, dadurch gekennzeichnet, daß die Einrichtung zur Flüssigkeitszufuhr besteht aus

a) einem kreisringförmigen, ebenen Boden (1) mit einer nach oben weisenden, den unteren Rand des Radialspalts bildenden zylindrischen äußeren Begrenzung (2) und einer nach unten weisenden, einen Anschlußflansch (14) tragenden zylindrischen inneren Begrenzung (3),

b) einer mit dem Anschlußflansch (14) verbundenen Platte (4) mit zentralem Rohranschluß (5),

c) einer auf die Platte (4) aufgesetzten Dralleinrichtung (6) deren obere ebene Abdeckung (7) eine zentrale Durchtrittsöffnung (16) aufweist,

d) einer kegelförmigen Abdeckung (8), die über ein Rohr (9) auf der Abdeckung (7) abgestützt ist sowie

e) einem auf die Platte (4) aufgesetzten zylinder (10), dessen äußerer Durchmesser etwas kleiner ist, als der größte Durchmesser der kegelförmigen Abdeckung (8).

2. Radialstromwäscher nach Anspruch 1, dadurch gekennzeichnet, daß die kegelförmige Abdeckung (8) oben eine zylindrische Öffnung (11) aufweist, die von einer kleineren kegelförmigen Abdeckung (12) unter Freilassung eines Spaltes (13) zwischen Abdeckung (8) und Abdeckung (12) überdeckt ist.

## Claims

1. A device for supplying scrubbing liquid in a radial flow scrubber, in which the radial gap is defined by a top horizontal edge of a gas-guiding device and an opposite bottom horizontal edge of the vertically adjustable liquid-supplying device, characterized in that the device for supplying liquid consists of

a) a circular ring-shaped flat bottom (1), witch is provided with an upwardly facing, cylindrical outer boundary (2), which constitutes the bottom edge of the radial gap, and with a downwardly facing cylindrical inner boundary (3), which carries a connecting flange (14),

b) a plate (4), which is connected to the connecting flange (14) and is provided with a central tubular port (5),

c) a swirler (6), which is mounted on top of the plate (4) and has a flat top cover (7) formed with a central through opening (16),

d) a conical cover (8), which is supported on the flat cover (7) by a tube (9), and

e) a cylinder (10), which is mounted on top of the plate (4) and has an outside diameter that is somewhat smaller than the largest diameter of the conical cover (8).

2. A radial flow scrubber according to claim 1, characterized in that the conical cover (8) has at its top a cylindrical opening (11), which is covered by a smaller conical cover (12), which defines a gap (13) with the conical cover (8).

## Revendications

1. Dispositif d'alimentation en liquide de lavage dans un laveur à circulation radiale, dans lequel la fente radiale est formée par un bord horizontal supérieur du dispositif d'acheminement de gaz et par un bord horizontal en regard du dispositif d'alimentation en liquide réglable en hauteur, caractérisé en ce que le dispositif d'alimentation en liquide est constitué de:

a) Un fond plat et annulaire (1) avec une délimitation (2) externe cylindrique tournée vers le haut et formant le bord inférieur de la fente radiale et une délimitation (3) interne cylindrique tournée vers le bas et portant une bride de raccordement (14) ;

b) Une plaque (4) reliée à la bride de raccordement (14) avec un raccord tubulaire central (5) ;

c) Un dispositif de torsion (6) monté sur la plaque (4) dont le chapeau plan supérieur (7) présente une ouverture de passage centrale (16);

d) Un chapeau conique (8) qui est soutenu par un tube (9) sur le chapeau (7) précité ainsi que

e)    Un cylindre (10) monté sur la plaque (4), dont le diamètre extérieur est un peu plus petit que le plus grand diamètre du chapeau conique (8).

2. Laveur à circulation radiale selon la revendication 1, caractérisé en ce que le chapeau conique (8) présente dans sa partie supérieure une ouverture cylindrique (11) qui est recouverte par un chapeau conique plus petit (12) en formant une fente (13) entre le chapeau (8) et le chapeau (12).

# Fig.

EP 0 324 200 B1